# EUROPÄISCHE PATENTSCHRIFT

(11) **EP 2 664 812 B1**
(45) Veröffentlichungstag und Bekanntmachung des Hinweises auf die Patenterteilung: **23.11.2016**
(21) Anmeldenummer: 13002202.3
(22) Anmeldetag: 25.04.2013
(51) Int. Cl.: F16D 27/00, F16D 27/112

(54) **Reibschaltkupplung**
Friction coupling
Embrayage à friction

(30) Priorität: 15.05.2012 DE 102012009589
(43) Veröffentlichungstag der Anmeldung: 20.11.2013
(73) Patentinhaber: LICOS Trucktec GmbH, 88677 Markdorf (DE)
(72) Erfinder: Ulucan, Lütfü, 88693 Deggenhausertal (DE)
(74) Vertreter: Otten, Roth, Dobler & Partner mbB Patentanwälte

(56) Entgegenhaltungen:
- EP-A1- 2 299 085
- EP-A2- 2 241 777
- DE-A1- 10 158 732

## Beschreibung

### Stand der Technik

Zur Übertragung von Drehmomenten zwischen einem antreibbaren Rotor und einem mit dem Rotor anzutreibenden Element sind schaltbare Reibkupplungen bekannt, mit welchen miteinander zu kuppelnde Teile wie beispielsweise scheibenartige Kupplungskomponenten wahlweise getrennt oder insbesondere kraftschlüssig verbunden werden können.

Derartige Reibschaltkupplungen können als Magnetkupplungen ausgebildet sein, die eine Elektromagnetanordnung mit einem an eine elektrische Spannungsquelle anschließbaren bzw. bestrombaren Spulenkörper bzw. einer Drahtwicklung und einem Spulenträger aus magnetisch leitfähigem Material umfassen.

Dazu zählen auch solche Anordnungen, welche zusätzlich Permanentmagnete aufweisen, durch deren Magnetwirkung, bei nicht magnetisch wirkendem Elektromagneten, ein versetzbares Kupplungselement gegen zum Beispiel eine Federkraft oder dergleichen an einen Gegenabschnitt angezogen wird und diese kraftschlüssig für eine Drehmomentübertragung verbunden sind. Durch Bestromung des Elektromagneten kann dann mit dem erzeugten Magnetfeld die Wirkung des Dauermagneten so abgeschwächt bzw. aufgehoben werden, dass die Reibkupplung außer Eingriff gerät, indem das versetzbare Kupplungselement die Kraftschlussposition verlässt.

Die genannten Kupplungen werden beispielsweise in Fahrzeugen eingesetzt.

Nachteilig an den beschriebenen Anordnungen ist die vergleichsweise aufwändige Fertigung solcher Kupplungen und deren Komponenten.

Die EP 2 241 777 A2 thematisiert eine elektromagnetisch betätigbare Reibscheibenkupplung mit einem Rotor, einer über Magnetkräfte gegen den Rotor anziehbaren Ankerscheibe und einer schaltbaren Spule zum Aufbringen einer Kraft auf die Ankerscheibe.

In der EP 2 299 085 A1 wird eine Antriebsanordnung für ein auf einer Welle sitzendes Pumpenrad einer Kühlwasserpumpe einer Verbrennungsmaschine mit einem feststehenden Pumpenrahmen und einem Antriebsrad mit einer Riemenscheibe gezeigt.

Die DE 101 58 732 A1 betrifft ein Antriebsorgan für eine Wasserpumpe des Kühlwasserkreislaufes eines Verbrennungsmotors sowie eine Reibschaltkupplung.

### Aufgabe und Vorteile der Erfindung

Aufgabe der vorliegenden Erfindung ist es, Reibschaltkupplungen der einleitend genannten Art technisch bzw. im Hinblick auf eine wirtschaftliche Fertigung zu verbessern.

Diese Aufgabe wird durch den unabhängigen Anspruch gelöst.

Die abhängigen Ansprüche betreffen vorteilhafte Varianten der Erfindung.

Die Erfindung geht aus von einer Reibschaltkupplung für eine Drehmomentübertragung von einem um eine Achse antreibbaren Rotor auf ein anzutreibendes Element umfassend eine Reibscheibenkupplung mit einer Elektromagnetanordnung, die einen Spulenkörper und einen den Spulenkörper tragenden und diesen zumindest teilweise umgebenden ferromagnetisch leitenden Spulenträger aufweist, und benachbart zu dem Spulenträger Permanentmagnetmittel vorhanden sind, über welche ein axial bewegbarer Reibabschnitt der Reibscheibenkupplung magnetisch mit dem Rotor verbindbar ist. vorzugsweise dreht das anzutreibende Element um die gleiche Achse, um welche der Rotor drehbar ist.

Der wesentliche Aspekt der Erfindung liegt darin, dass die Permanentmagnetmittel derart am Rotor angeordnet sind, dass die Permanentmagnetmittel an einer Seite, die quer zu deren Magnetisierungsrichtung steht, im Wesentlichen von keinem magnetisch leitenden Abschnitt des Rotors überdeckt sind, wobei Verankerungsmittel für eine Anbringung der Permanentmagnetmittel am Rotor vorhanden sind, die einen am Rotor vorbereitet ausgebildeten Aufnahmeabschnitt umfassen, über den die Permanentmagnetmittel am Rotor positionsrichtig aufgenommen sind, und wobei die Permanentmagnetmittel in einem Volumen eines rohrförmigen Abschnitts angeordnet sind.

Insbesondere sind die Permanentmagnetmittel über die Verankerungsmittel an dem Rotor fest verankerbar. Vorteilhafterweise sind damit die Permanentmagnetmittel einfach bzw. montagefreundlich an dem Rotor anbringbar. Es ist zudem vorteilhaft, dass ein Grundkörper des Rotors aus einem Bauteil gebildet bzw. einstückig gefertigt ist. Die Permanentmagnetmittel sind insbesondere ringförmig, zum Beispiel einteilig, oder aus mehreren Teilen gebildet, die Abschnitten einer Ringform entsprechen, z. B. aus mehreren ringabschnittförmigen Ringsegmenten gebildet sind. Sind an dem Rotor mehrere Permanentmagnetelemente vorhanden, sind diese bevorzugt untereinander gleichartig ausgebildet.

Der rohrförmige Abschnitt ist z. B. Teil des Rotors bzw. des Halteelements. Ein Rotorgrundkörper des Rotors, also ohne Halteelement und Permanentmagnetmittel, ist vorteilhaft aus einem Bauteil bzw. einstückig ausgebildet. Der Rotor kann ein Rohrelement umfassen bzw. der Rotorgrundkörper aus einem solchen hergesellt sein ggf. durch Verbindung mit weiteren Rotorelementen.

Die Permanentmagnetmittel können insbesondere innenseitig an einem ohnehin vorhandenen Abschnitt des Rotors, zum Beispiel einem in axialer Richtung sich erstreckender Stegbereich angebracht werden. Der Stegbereich bzw. dessen mit den Permanentmagnetmitteln bestückte Seite ist dabei über einen Luftspalt von der Elektromagnetanordnung bzw. insbesondere dem Spulenträger beabstandet.

Eine bislang realisierte Überdeckung der Permanentmagnetmittel zum Beispiel in der Art einer Sandwichstruktur, was aufwändig ist, kann vermieden werden, da die Befestigung der Permanentmagnetmittel mit den Verankerungsmitteln ausreichend hohe Haltekräfte bereitstellt.

Die Magnetfeldlinien der am Rotor fixiert aufgenommenen Permanentmagnetmittel verlaufen beispielsweise senkrecht zu Hauptseiten der betreffenden Permanentmagnete bzw. die Flächen der Hauptseiten stehen zumindest nahezu senkrecht zur Magnetisierungsrichtung der Permanentmagnetmittel. Die Ausbildung der Permanentmagnetmittel kann zum Beispiel durch mehrere segmentartige Dauermagnete oder durch einen durchgängig geschlossenen Ring aus einem Permanentmagnetmaterial realisiert sein.

Die Permanentmagnetmittel können vorteilhaft an unterschiedlichen Stellen bzw. in verschiedenen Ausrichtungen am Rotor vorhanden sein. Es ist lediglich zu beachten, dass sich jeweils ein geeigneter Magnetfluss zwischen dem Rotor und dem anzutreibenden Element ausbilden kann. Vorteilhaft sind die Permanentmagnetmittel mit ihren Hauptseiten so orientiert, dass deren Normalen in axialer oder radialer Richtung bezogen auf die Drehachse des Rotors ausgerichtet sind.

Die Fixierung der Permanentmagnetmittel am Rotor über die Verankerungsmittel ist insbesondere so möglich, dass genau eine Hauptseite bzw. Hauptfläche der Permanentmagnetmittel an dem Rotor anliegt, wobei die gegenüberliegende weitere Hauptseite der Permanentmagnetmittel frei bleibt bzw. an den Luftspalt angrenzt und damit vorteilhaft benachbart zum Spulenträger der Elektromagnetanordnung.

Der ferromagnetische Spulenträger grenzt demgemäß ebenfalls mit einer flächigen Spulenseite an den Luftspalt an, wobei diese Spulenseite bevorzugt parallel ausgerichtet der freien Hauptseite der Permanentmagnetmittel gegenüberliegt. Insgesamt ist diese Anordnung für die gewünschte Ausbildung der Magnetfeldlinien vorteilhaft.

Vorteilhafterweise umfassen die Verankerungsmittel einen Absatz, an welchem eine auf den Absatz abgestimmte Anschlagfläche der Permanentmagnetmittel ansteht, wenn die Permanentmagnetmittel am Rotor positionsrichtig angebracht sind. Im angebrachten Zustand der Permanentmagnetmittel am Rotor kommt der Absatz, beispielsweise mit aufeinander rechtwinklig zulaufende benachbarte Absatz-Flächenbereichen am Rotor, und die Anschlagfläche der Permanentmagnetmittel, beispielsweise eine Schmalseite oder Stirnseite der Permanentmagnetmittel, in gegenseitige flächige Anlage. Dabei stellt der Absatz einen mechanischen Anschlag für die Permanentmagnetmittel dar, so dass diese daran anstehen und am Rotor in zumindest eine Raumrichtung gegen eine Bewegung gesichert sind. Sind die Permanentmagnetmittel über ein Haltelement aufgenommen, kann das Halteelement mit einer Seite an dem Absatz anstehen und damit in die betreffende Richtung positionsfixiert sein.

Weiter ist es vorteilhaft, dass die Verankerungsmittel einen zu einer Seite des Rotors zurückgesetzten Anlagebereich aufweisen. Dabei stellt der Anlagebereich z. B. eine Anlagefläche bereit, die zum Beispiel eine Grundfläche einer Vertiefung sein kann, die als eine feste Anlageseite bzw. Begrenzung für die eingesetzten Permanentmagnetmittel bzw. ein Halteelement dient.

Dabei kann der Absatz am Rotor um die Vertiefung umlaufend vorhanden sein, wobei die Vertiefung zur Aufnahme bzw. zum wenigstens teilweise versenkten Einsetzen der Permanentmagnetmittel am Rotor dient. Die Vertiefung kann zum Beispiel eine ebene oder hohlzylindrisch gewölbte in der Grundform rechtwinklige Grundfläche aufweisen, welche die Anlagefläche bildet, wobei die Form und Größe bzw. eine Unterseite der Permanentmagnetmittel entsprechend geformt auf die Form und Größe bzw. Grundfläche der Vertiefung abgestimmt ausgebildet ist und damit passend in die Vertiefung einsetzbar ist. Die Permanentmagnetmittel können z. B. bündig oder überstehend in der Vertiefung aufgenommen sein. Im Fall einer rechteckigen Vertiefung stellt der Absatz, der in seinem Verlauf vier zueinander rechtwinklig stehende Randabschnitte der Vertiefung bildet und die Vertiefung umrandet, einen mechanischen Anschlag für die Permanentmagnetmittel in vier unterschiedliche Raumrichtungen bereit.

Weiter wird vorgeschlagen, dass in einer vorteilhaften Variante der Erfindung ein Halteelement vorgesehen ist, an welchem die Permanentmagnetmittel vorhanden sind, wobei das Halteelement zur Anbringung der Permanentmagnetmittel am Rotor lösbar ansteckbar ist, insbesondere einklickbar bzw. verrastbar. Damit wird die Montage der Permanentmagnetmittel vereinfacht.

Auch ist es vorteilhaft, dass das Halteelement einen ringförmigen Grundkörper umfasst, der am Rotor lösbar angebracht ist.

Das Halteelement ist insbesondere an die Form des Rotors beziehungsweise eines Abschnitts davon angepasst, insbesondere ringförmig bzw. hohlzylindrisch oder aus wenigstens einem Ausschnitt dieser Form. Die Permanentmagnetmittel sind vorteilhaft entsprechend geformt, also beispielsweise ringförmig bzw. ringsegmentförmig und am Halteelement aufgenommen.

Auch ist es vorteilhaft, dass zur Anbringung der Permanentmagnetmittel am Rotor eine Klebeverbindung ausgebildet ist. Dies ist insbesondere eine einfache Montagemöglichkeit. Dabei können die Permanentmagnetmittel am Rotor direkt oder am Halteelement angeklebt sein, welches selbst ggf. ebenfalls am Rotor durch Kleben befestigt ist, bei Bedarf zusätzlich durch weitere Elemente gesichert.

Vorteilhafterweise ist ein in einer Nut am Rotor einsetzbarer Sicherungsring vorgesehen, um die Permanentmagnetmittel im angebrachten Zustand bezogen auf zumindest eine Richtung am Rotor zu fixieren. Insbesondere erfolgt damit eine Sicherung der Permanentmagnetmittel in eine zu einer Drehachse des Rotors axiale Richtung am Rotor. Ein Sicherungsring ist ein zuverlässiges und bewährtes Sicherungselement für rotierende Bauteile. Der Sicherungsring kann zum Beispiel ein Sprengring sein. Es ist auch möglich, dass das Halteelement am Rotor mit einem Sicherungsring gesichert ist.

Eine weitere vorteilhafte Variante der Erfindung zeichnet sich dadurch aus, dass die Permanentmagnetmittel in einem Volumen eines Hohlzylinders angeordnet sind. Dies ist konstruktiv und funktionell vorteilhaft. Die Permanentmagnetmittel sind vorteilhaft radial innen an einem äußeren Teil des Rotors vorhanden, an dem beispielsweise außen eine Riemenauflage einer Riemenscheibe ausgebildet ist, wenn der Rotor als Riemen- bzw. Keilriemenscheibe ausgestaltet ist.

Gemäß einer vorteilhaften Variante der Erfindung sind die Permanentmagnetmittel derart ausgelegt, dass in einem elektrisch geschalteten Zustand der Elektromagnetanordnung durch Schwächung der magnetischen Wirkung der Permanentmagnetmittel die Verbindung des Reibabschnitts mit dem Rotor aufhebbar ist. So kann eine so genannte Fail-Safe-Kupplung realisiert werden, wobei in einem stromlosen Zustand durch die Permanentmagnetmittel immer die sichere reibschlüssige Verbindung der Reibschaltkupplung realisiert ist. Damit können auf einen Ausfall der Stromversorgung zurückgehende kritische Situationen aufgrund von dann andernfalls nicht geschalteten Reibschaltkupplung vermieden werden. Ist die geschaltete Reibschaltkupplung zum Beispiel notwendig für die Aufrechterhaltung eines Kühlsystems z. B. eines den Rotor antreibenden Verbrennungsantriebs, wird selbst bei einem Ausfall der elektrischen Versorgung der Elektromagnetanordnung vorteilhaft die Kühlung aufrechterhalten.

Weiter ist es von Vorteil, dass die Permanentmagnetmittel gesintert oder gespritzt sind.

Dies ist im Hinblick auf die Herstellung und/oder die Eigenschaften der Permanentmagnetmittel vorteilhaft.

Schließlich ist es vorteilhaft, dass die Permanentmagnetmittel als Ringsegmente ausgebildet sind. Insbesondere sind mehrere gleichartige Ringsegmente gleichmäßig voneinander beabstandet und umfänglich zur Drehachse des Rotors an diesem angeordnet.

### Figurenbeschreibung:

Weitere Vorteile und Merkmale der Erfindung sind anhand der in den Figuren schematisiert gezeigten erfindungsgemäßen Ausführungsbeispiele näher erläutert.

Im Einzelnen zeigt:
- Figur 1: eine in Teilansicht dargestellte erfindungsgemäße Reibschaltkupplung im Schnitt,
- Figur 2: einen Rotor einer alternativen erfindungsgemäßen Reibschaltkupplung perspektivisch im Schnitt und
- Figur 3: einen vergrößerten Ausschnitt eines Teils einer weiteren alternativen erfindungsgemäßen Reibschaltkupplung in Schnittansicht.

Für sich entsprechende Elemente unterschiedlicher Ausführungsbeispiele sind in den Figuren teilweise die gleichen Bezugszeichen verwendet.

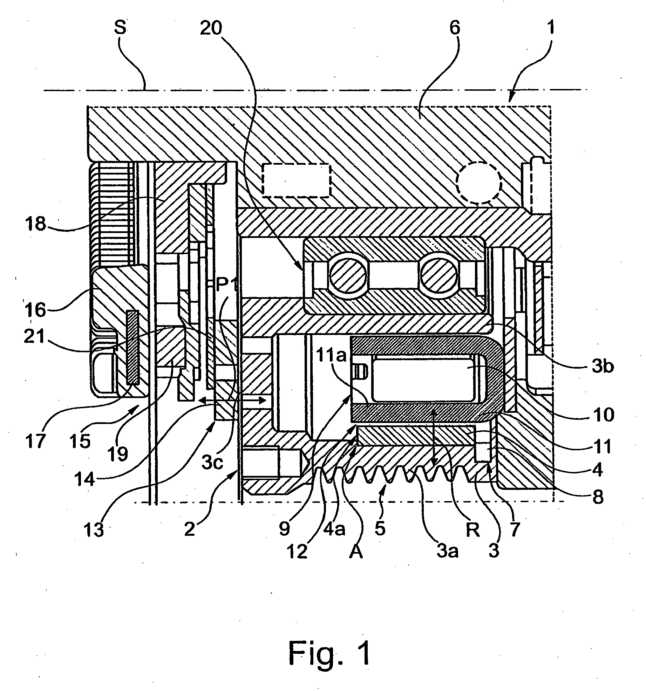

Figur 1 zeigt im Schnitt eine Anordnung, zum Beispiel für ein Fahrzeug mit Brennkraftantrieb mit einer erfindungsgemäßen Reibschaltkupplung 1, die als sogenannte Fail-Safe-Kupplung ausgebildet ist. Die in Figur 1 gezeigte erfindungsgemäße Reibschaltkupplung 1, welche für eine Drehmomentübertragung eines um eine Achse S antreibbaren Rotors 2 auf ein anzutreibendes Element ausgestaltet ist, weist Permanentmagnetmittel an einem Abschnitt des Rotors 2 auf, wobei die Permanentmagnetmittel mit dem Rotor 2 mitrotieren.

Die Reibschaltkupplung 1 umfasst hierfür an dem Rotor 2 eine Riemenscheibe 3 mit Permanentmagnetmittel, die aus einem Permanentmagnetring 4 aus einem dauermagnetischen Material realisiert sind. Der Permanentmagnetring 4 ist vorteilhafterweise radial innen liegend bzw. auf einer Unterseite gegenüberliegend zu einer Riemenauflage 5 der Riemenscheibe 3 vorhanden.

Um unerwünschte Wärmespannungen durch sich im Betrieb erwärmende Teile im Bereich des Permanentmagnetrings 4 zu vermeiden, insbesondere aufgrund eines elektrischen Stromflusses durch stromleitende Teile, kann der Permanentmagnetring 4 an einer Stelle umfänglich getrennt bzw. als offener Ring mit z. B. genau einem Schlitz versehen sein.

Aus dem gleichen Grund können in einer vorteilhaften Variante der Reibschaltkupplung 1 die Permanentmagnetmittel anstelle des Permanentmagnetrings 4 aus mehreren Ringsegmenten bestehen, die auf einer Umfangslinie liegen und umfänglich beabstandet bzw. konzentrisch zur Drehachse S der Welle 6 positioniert sind. Grundlegend für die Ausbildung der gewünschten permanentmagnetischen Wirkung der Permanentmagnetmittel ist es, dass in allen Ringsegmenten bzw. Segmenten der Permanentmagnetmittel die Magnetisierungsrichtung gleich ist bzw. dauerhaft erhalten bleibt. Diese Anordnung ist insbesondere zu unterscheiden von Systemen zur Ausbildung von Wirbelströmungen und hat insbesondere nichts zum Beispiel mit einem Wirbelstrom-System zu tun.

Durch einen umfänglich umlaufenden Absatz A, welcher Teil von Verankerungsmitteln ist und der an einer radial innen liegenden Seite eines radial äußeren Stegs 3a von radial beabstandeten Stegen 3a, 3b der Riemenscheibe 3 ausgebildet ist, wird ein Anschlag für eine Stirnseite 4a des Permanentmagnetrings 4 in einem positionsrichtigen Montagezustand bereitgestellt. Damit wird vorteilhafterweise erreicht, dass im Montagezustand des Permanentmagnetrings 4, der mit einer radial äußeren Längsseite an dem Steg 3a angebracht ist, axial in eine Richtung zu einem die Stege 3a und 3b verbindenden Riemenscheibengrund 3c positionsfest ist. Der Permanentmagnetring 4 ist zudem an seinem axial gegenüberliegenden Ende bzw. am freien Ende des Stegs 3a über einen vorgespannten in eine passende umlaufende Nut 7 im Steg 3a lösbar eingesetzten Sicherungsring 8 gesichert gegen eine Versatzbewegung im rotierenden Betrieb der Riemenscheibe 3.

Die Stege 3a und 3b begrenzen eine ringkanalartige Ausnehmung, in welche eine Elektromagnetanordnung 9 der Reibschaltkupplung 1 hineinragt. Die positionsfeste Elektromagnetanordnung 9 weist eine Spule 10 und einen die Spule 10 dreiseitig umgreifenden im Axialschnitt U-förmigen Spulenträger 11 auf.

Der Permanentmagnetring 4 ist vorteilhaft mit einer radial innen liegenden Längsseite über einen geringen Luftspalt 12 beabstandet zu einem radial äußeren Steg 11a des Spulenträgers 11. Die Längsseiten des Permanentmagnetrings 4 stehen quer zur Magnetisierungsrichtung R des Permanentmagnetrings 4.

Die Reibschaltkupplung 1 gemäß Figur 1 umfasst außerdem eine Reibscheibenkupplung 13 mit einer Ankerscheibe 14, welche abhängig von permanentmagnetischen bzw. elektromagnetischen Kräften, wie weiter unten beschrieben, axial versetzbar ist.

Der Rotor 2 rotiert antreibbar um die Achse S.

Vorteilhafterweise erstreckt sich in axialer Richtung zur Achse S bzw. zur Welle 6 der Permanentmagnetring 4 über etwas mehr als die axiale Erstreckung der Spule 10. Auch ist es vorteilhaft, dass der Permanentmagnetring 4 derart im Magnetfluss vorhanden und ausgebildet ist, dass bei nichtbestromter Spule 10 die Ankerscheibe 14 an einen Gegenabschnitt des Rotors 2 bzw. an den Riemenscheibengrund 3c reibschlüssig angezogen wird, wobei eine Drehmomentübertragung zwischen dem Rotor 2 und der Ankerscheibe 14 und damit eine Drehmomentübertragung vom Rotor 2 auf die Welle 6 erfolgt, welche das anzutreibende Element darstellt.

Die Anordnung aus Figur 1 weist außerdem eine Wirbelstromanordnung 15 im Bereich eines auf der Welle 6 sitzenden Lüfterrades 16 auf, wobei im Lüfterrad 16 bzw. von Material des Lüfterrads 16 umschlossen zum Beispiel ein metallischer umlaufender Ring 17 ausgebildet ist. An einem mit der Welle 6 verbundenen Flanschring 18 ist axial gegenüberliegend zum Bereich des Rings 17 eine Mehrzahl von alternierend gepolten Einzel-Permanentmagneten 19 der Wirbelstromanordnung 15 vorhanden. Die Einzel-Permanentmagneten 19 haben nichts mit dem Permanentmagnetring 4 zu tun.

Des Weiteren ist ein Wälzkörperlager 20 vorhanden, über welches der Rotor 2 gegenüber der Welle 6 drehbar gelagert ist. Das Wälzkörperlager 20 ist hier beispielsweise als zweireihiges Wälzkugellager ausgebildet. Dabei ist es vorteilhaft, dass das Wälzkörperlager 20 über die gesamte axiale Erstreckung des als Riemenauflage 5 ausgebildeten Teils der Riemenscheibe 3 axial sich erstreckend vorhanden ist.

Über die Elektromagnetanordnung 9 kann auf die Reibescheibenkupplung 13 eingewirkt werden, wobei die Reibscheibenkupplung 13 im geschalteten Zustand der Reibschaltkupplung zur Drehmomentübertragung vom Rotor 2 auf die Welle 6 dient. Die Reibscheibenkupplung 13 umfasst die fest mit der Welle 6 verbundene Reibscheibe, die als ferromagnetische Ankerscheibe 14 ausgestaltet ist, welche in Richtung gemäß Doppelpfeil P1 bzw. axial zur Welle 6 bzw. parallel zur Drehachse S versetzbar ist. Hierzu ist die Ankerscheibe 14 über eine federnd auslenkbare Federscheibe 21 zum Beispiel aus Federstahl aufgenommen, wobei die Federscheibe 21 mit dem Flanschring 18 radial innen liegend fest verbunden ist.

Die Reibscheibenkupplung 13 mit der Ankerscheibe 14 ist derart ausgebildet, dass die Ankerscheibe 14 in der Praxis jeweils eine von zwei unterschiedlichen Betriebsstellungen einnimmt. In einer ersten Betriebsstellung (nicht dargestellt) wird die Ankerscheibe 14 durch die von den Permanentmagnetmitteln gemäß des Permanentmagnetrings 4 erzeugten Magnetkräften an einen stirnseitigen Gegenabschnitt bzw. den Riemenscheibengrund 3c des ferromagnetisch leitenden Rotors 2 herangezogen, so dass die beiden Komponenten 14 und 3c kraft- bzw. reibschlüssig zusammenwirken bzw. drehfest miteinander verbunden sind. Zur Ausbildung eines gewünschten Magnetfeldlinienverlaufs sind die Ankerscheibe 14 und der Riemenscheibengrund 3c mit zueinander versetzten Öffnungen bzw. Materialaussparungen versehen.

Soll bei rotierendem Rotor 2 die Drehmomentübertragung auf die Welle 6 aufgehoben werden, erfolgt die Bestromung der Spule 10 der Elektromagnetanordnung 9, womit ein Magnetfeld erzeugt wird, welches dem Magnetfeld des Permanentmagnetrings 4 derart entgegenwirkt, dass ein resultierendes bzw. gegebenenfalls nahezu vollständig aufgehobenes Magnetfeld so gering ist bzw. verschwindet, dass die auf die Ankerscheibe 14 wirkende Federkraft der Federscheibe 21 dafür sorgt, dass die Ankerscheibe 14 von dem Riemenscheibengrund 3c wegbewegt wird. Damit wird die Welle 6 nicht mehr vom Rotor 2 direkt drehangetrieben (siehe Figur 1).

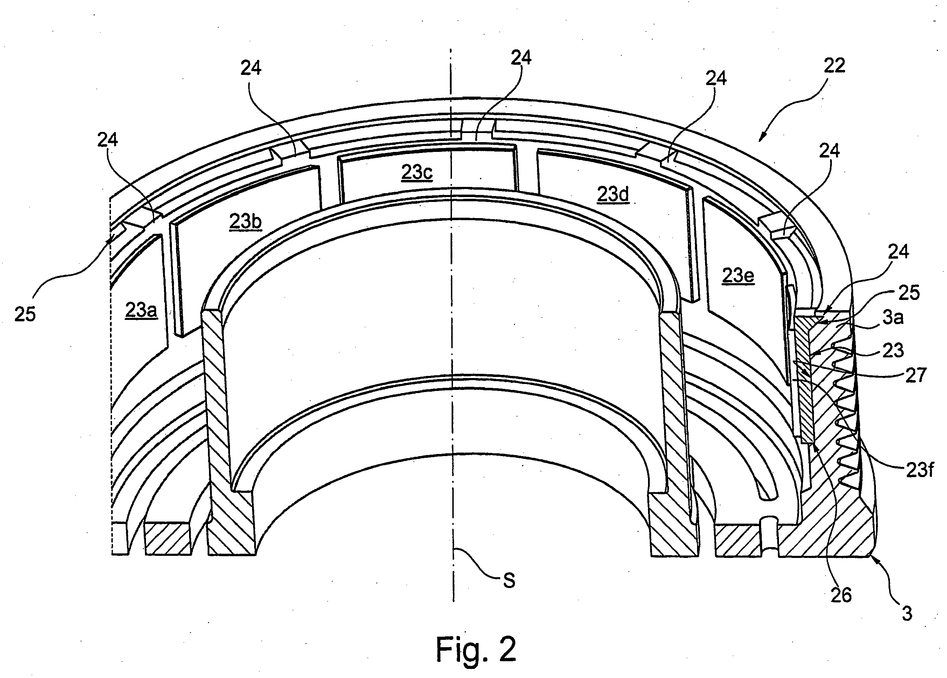

Figur 2 zeigt im Schnitt einen perspektivisch dargestellten Rotor 22 einer alternativen erfindungsgemäßen Reibschaltkupplung. Der Rotor 22 ist in seinem Grundaufbau mit dem Rotor 2 gemäß Figur 1 vergleichbar und weist dementsprechend eine Riemenscheibe 3 mit einem äußeren Steg 3a auf, an dem radial innenseitig die Permanentmagnetmittel in Form von mehreren umfänglich zur Drehachse S angeordneten Permanentmagnetelementen vorhanden sind, von denen gemäß Figur 2 die Permanentmagnetelemente 23a bis 23f sichtbar sind. Die Permanentmagnetelemente 23a bis 23f sind fest an einem ringförmigen Halteelement 23 aufgenommen, das Teil von Verankerungsmitteln ist. Die im Grundriss rechteckförmigen Permanentmagnetelemente 23a bis 23f sind leicht gebogen an die hohlzylindrische Form des Halteelements 23 angepasst.

Das Halteelement 23 ist aus Kunststoff gefertigt und mit einer Mehrzahl von vorstehenden leicht elastisch ausweichbaren Einrastnasen 24 ausgebildet, die an einem Rand des Halteelements 23 umfänglich gleichmäßig voneinander beabstandet vorhanden sind. Die Einrastnasen 24 sind im Schnitt dreieckförmig und ragen auf einer Seite des Halteelements 23 vor, die der Seite mit den Permanentmagnetelementen 23a bis 23f gegenüberliegt.

Zur zum Beispiel manuellen bzw. werkzeuglosen lösbaren Anbringung des Halteelements 23 samt der Permanentmagnetelemente an dem Rotor 22 greifen die Einrastnasen 24 in eine auf die Einrastnasen 24 passend abgestimmte durchgehend umlaufende Nut 25 radial innenseitig am Steg 3a. Das Haltelement 23 kann damit am Rotor 22 beispielsweise eingeklickt werden, indem die Einrastnasen 24 in die Nut 25 gedrückt werden und dort einrasten, so dass das Haltelement 23 mit den Permanentmagnetelementen am Rotor 22 fixiert bzw. gesichert angebracht ist, was Figur 2 zeigt.

Dabei kommt ein weiterer rohrförmiger Abschnitt des Haltelements 23 an einem vertieft bzw. zurückversetzt ausgebildeten Anlagebereich 27 innen am Steg 3a in flächige Anlage. Der Anlagebereich 27 wird von einem Absatz 26 am Steg 3a begrenzt. Der an der hohlzylindrischen Wandung des Stegs 3a ausgebildete Anlagebereich 27 samt Absatz 26 ist durchgehend umfänglich zur Drehachse S vorhanden.

Die Permanentmagnetelemente 23a bis 23f können beispielsweise am Halteelement 23 angeklebt oder anderweitig fest fixiert werden. Mit dem Halteelement 23, welches mit den Permanentmagnetelementen 23a bis 23f und weiteren nicht dargestellten Permanentmagnetelementen bestückt ist, können die Permanentmagnetmittel am Rotor 22 vorteilhaft fixiert werden bzw. gegebenenfalls wieder gelöst werden.

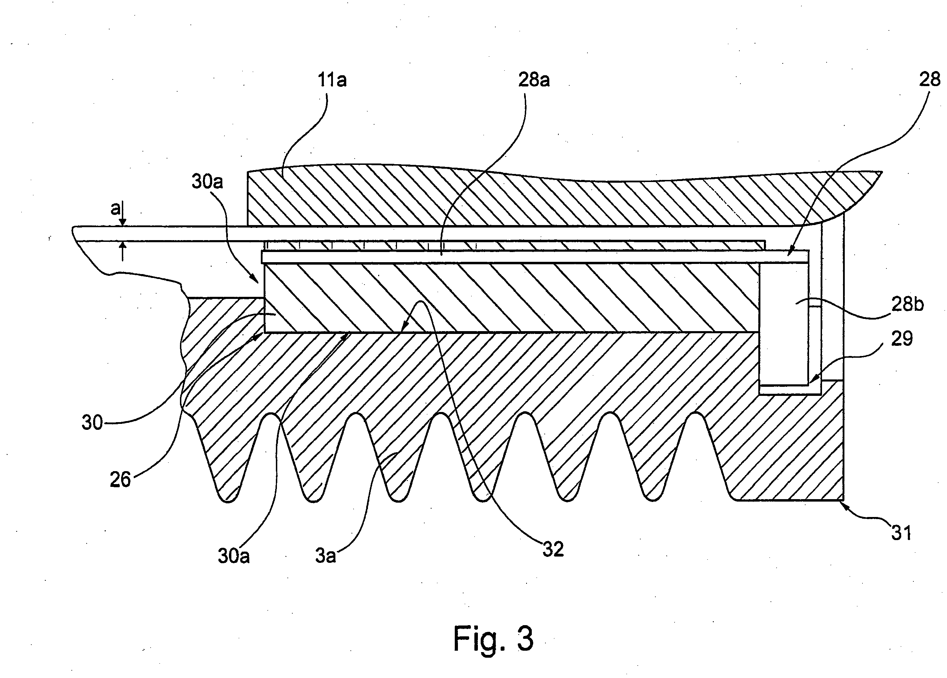

Figur 3 zeigt zu Figur 1 alternative Verankerungsmittel zur Anbringung eines Permanentmagnetelements 30 an der Innenseite eines Steges 3a eines ausschnittsweise gezeigten Rotors 31. Anstelle des Sicherungsrings 8 gemäß Figur 1 ist ein als Kunststoffkamm 28 ausgebildetes Halteelement zur Verankerung des Permanentmagnetelements 30 vorgesehen. Außerdem ist ein Ausschnitt eines Stegs 11a eines Spulenträgers einer Elektromagnetanordnung gezeigt, wobei der Steg 11a über einen Luftspalt mit dem Abstand a von der Innenseite des Permanentmagnetelements 30 beabstandet ist. Das Permanentmagnetelement 30 ist an dem Kunststoffkamm 28 fest aufgenommen. Der Kunststoffkamm 28 ist im Schnitt L-förmig und weist einen Hülsenabschnitt 28a auf, an dem das Permanentmagnetelement 30 angebracht ist, und einen zum Hülsenabschnitt 28a rechtwinklig abstehenden im Schnitt rechteckförmigen Ring 28b. Der Ring 28b greift im gezeigten lösbar angebrachten Zustand des Kunststoffkamms 28 am Rotor 31 selbstsichernd in eine vorbereitet ausgebildete Nut 29 am Steg 3a ein.

Des Weiteren ist das Permanentmagnetelement 30, welches beidseitig am Kunststoffkamm 28 übersteht analog zum Haltelement 23 gemäß Figur 2 am Steg 3a im Bereich eines zurückversetzten Bereichs mit einem Absatz 26 radial innen am Steg 3a flächig anliegend eingesetzt gehalten. Eine Stirnseite 30a des Permanentmagnetelements 30 steht dabei an einer vertikalen Abschnitt des Absatzes 26 an. Die maßgebliche Haltewirkung erfolgt mit dem in die Nut 29 eingeklickten bzw. eingedrückten und dort verrasteten Ring 28, was in Figur 3 nur stark schematisiert bzw. vereinfacht angedeutet ist. Eine Unterseite 30a des Permanentmagnetelements 30 liegt zudem flächig an einem zu einer radial inneren Seite des Stegs 3a des Rotors 31 zurückversetzten Anlagebereich 32 flächig an.

Zusätzlich zum Einklicken oder alternativ kann der Kunststoffkamm 28 mit dem Permanentmagnetelement 30 auch am Rotor 31 bzw. dem Steg 3a eingeklebt sein.

### Bezugszeichenliste:

- 1: Reibschaltkupplung
- 2: Rotor
- 3: Riemenscheibe
- 3a: Steg
- 3b: Steg
- 3c: Riemenscheibengrund
- 4: Permanentmagnetring
- 4a: Stirnseite
- 5: Riemenauflage
- 6: Welle
- 7: Nut
- 8: Sicherungsring
- 9: Elektromagnetanordnung
- 10: Spule
- 11: Spulenträger
- 11a: Steg
- 12: Luftspalt
- 13: Reibscheibenkupplung
- 14: Ankerscheibe
- 15: Wirbelstromanordnung
- 16: Lüfterrad
- 17: Ring
- 18: Flanschring
- 19: Einzel-Permanentmagnet
- 20: Wälzkörperlager
- 21: Federscheibe
- 22: Rotor
- 23: Halteelement
- 23a: Permanentmagnetelement
- 23b: Permanentmagnetelement
- 23c: Permanentmagnetelement
- 23d: Permanentmagnetelement
- 23e: Permanentmagnetelement
- 23f: Permanentmagnetelement
- 24: Einrastnase
- 25: Nut
- 26: Absatz
- 27: Anlagebereich
- 28: Kunststoffkamm
- 28a: Hülsenabschnitt
- 28b: Ring
- 29: Nut
- 30: Permanentmagnetelement
- 30a: Unterseite
- 30a: Stirnseite
- 31: Rotor
- 32: Anlagebereich

## Patentansprüche

1. Reibschaltkupplung (1) für eine Drehmomentübertragung von einem um eine Achse antreibbaren Rotor (2) auf ein anzutreibendes Element (6) umfassend eine Reibscheibenkupplung (13) mit einer Elektromagnetanordnung (9), die einen Spulenkörper (10) und einen den Spulenkörper (10) tragenden und diesen zumindest teilweise umgebenden ferromagnetisch leitenden Spulenträger (11) aufweist, und benachbart zu dem Spulenträger (10) Permanentmagnetmittel (4) vorhanden sind, über welche ein axial bewegbarer Reibabschnitt (14) der Reibscheibenkupplung (13) magnetisch mit dem Rotor (2) verbindbar ist, **dadurch gekennzeichnet, dass** die Permanentmagnetmittel (4) derart am Rotor (2) angeordnet sind, dass die Permanentmagnetmittel (4) an einer Seite, die quer zu deren Magnetisierungsrichtung steht, im Wesentlichen von keinem magnetisch leitenden Abschnitt des Rotors (2) überdeckt sind, wobei Verankerungsmittel für eine Anbringung der Permanentmagnetmittel (4) am Rotor (2) vorhanden sind, die einen am Rotor (2) vorbereitet ausgebildeten Aufnahmeabschnitt umfassen, über den die Permanentmagnetmittel (4) am Rotor (2) positionsrichtig aufgenommen sind und wobei die Permanentmagnetmittel (4) in einem Volumen eines rohrförmigen Abschnitts angeordnet sind.

2. Reibschaltkupplung nach Anspruch 1, **dadurch gekennzeichnet, dass** die Verankerungsmittel einen Absatz (26) umfassen; an welchem eine auf den Absatz (26) abgestimmte Anschlagfläche (4a, 30a) der Permanentmagnetmittel (4, 30) ansteht, wenn die Permanentmagnetmittel (4, 30) am Rotor (2, 31) positionsrichtig angebracht sind.

3. Reibschaltkupplung nach Anspruch 1 oder 2, **dadurch gekennzeichnet, dass** die Verankerungsmittel einen zu einer Seite des Rotors (2, 31) zurückgesetzten Anlagebereich (27, 32) aufweisen.

4. Reibschaltkupplung nach einem der vorherigen Ansprüche, **dadurch gekennzeichnet, dass** ein Halteelement (23, 28) vorgesehen ist, an welchem die Permanentmagnetmittel (23a-23f, 30) vorhanden sind, wobei das Halteelement (23, 28) zur Anbringung der Permanentmagnetmittel (23a-23f, 30) am Rotor lösbar ansteckbar ist, insbesondere einklickbar ist.

5. Reibschaltkupplung nach einem der vorherigen Ansprüche, **dadurch gekennzeichnet, dass** das Haltelement (23, 28) einen ringförmigen Grundkörper umfasst, der am Rotor (22, 31) lösbar angebracht ist.

6. Reibschaltkupplung nach einem der vorherigen Ansprüche, **dadurch gekennzeichnet, dass** zur Anbringung der Permanentmagnetmittel am Rotor eine Klebeverbindung ausgebildet ist.

7. Reibschaltkupplung nach einem der vorherigen Ansprüche, **dadurch gekennzeichnet, dass** ein in einer Nut (7) am Rotor (2) einsetzbarer Sicherungsring (8) vorgesehen ist, um die Permanentmagnetmittel (4) im angebrachten Zustand bezogen auf zumindest eine Richtung am Rotor (2) zu fixieren.

8. Reibschaltkupplung nach einem der vorherigen Ansprüche, **dadurch gekennzeichnet, dass** die Permanentmagnetmittel in einem Volumen eines Hohlzylinders angeordnet sind.

9. Reibschaltkupplung nach einem der vorherigen Ansprüche, **dadurch gekennzeichnet, dass** die Permanentmagnetmittel derart ausgelegt sind, dass in einem elektrisch geschalteten Zustand der Elektromagnetanordnung (9) durch Schwächung der magnetischen Wirkung der Permanentmagnetmittel die Verbindung des Reibabschnitts (14) mit dem Rotor (2) aufhebbar ist.

10. Reibschaltkupplung nach einem der vorherigen Ansprüche, **dadurch gekennzeichnet, dass** die Permanentmagnetmittel gesintert oder gespritzt sind.

11. Reibschaltkupplung nach einem der vorherigen Ansprüche, **dadurch gekennzeichnet, dass** die Permanentmagnetmittel als Ringsegmente (23a-23f) ausgebildet sind.

## Claims

1. Friction clutch (1) for torque transmission from a rotor (2) drivable about an axis to a driven element (6) comprising a friction disc clutch (13) with an electromagnet arrangement (9), having a coil body (10) and a ferromagnetically conducting coil carrier (11) supporting the coil body (10) and surrounding it at least partially, and permanent magnet means (4) are present adjacent to the coil carrier (11), by means of which an axially movable friction section (14) of the friction disc clutch (13) can be connected magnetically to the rotor (2), **characterised in that** the permanent magnet means (4) are arranged on the rotor (2), such that the permanent magnet means (4) are covered substantially on one side, located transversely to its magnetisation direction, by no magnetically conducting section of the rotor (2), wherein anchoring means are present for fixing the permanent magnet means (4) to the rotor (2), said means comprising a formed recessed section provided on the rotor (2), by means of which the permanent magnet means (4) are accommodated in the correct position on the rotor (2) and wherein the permanent magnet means (4) are arranged in a volume of a tubular section.

2. Friction clutch according to claim 1, **characterised in that** the anchoring means comprise a shoulder (26) on which a stop face (4a, 30a) of the permanent magnet means (4, 30) rests, matching the shoulder (26), when the permanent magnet means (4, 30) are fitted in the correct position on the rotor (2,31).

3. Friction clutch according to claim 1 or 2, **characterised in that** the anchoring means have a set-back support region (27, 32) on one side of the rotor. (2,31).

4. Friction clutch according to any one of the previous claims, **characterised in that** a retention element (23,28) is provided on which the permanent magnet means (23a-23f, 30) are present, wherein, in order to fit the permanent magnet means (23a-23f, 30) on the rotor, the retention element (23, 28) can be inserted detachably, in particular can be clipped in.

5. Friction clutch according to any one of the previous claims **characterised in that** the retention element (23, 28) comprises an annular base body which can be fitted detachably to the rotor (22, 31).

6. Friction clutch according to any one of the previous claims **characterised in that** a glued joint is formed to fit the permanent magnet means to the rotor.

7. Friction clutch according to any one of the previous claims **characterised in that** a securing ring (8) is provided, insertable in a groove (7) on the rotor (2), in order to attach the permanent magnet means (4), in the appropriate position relative to at least one direction, to the rotor (2).

8. Friction clutch according to any one of the previous claims **characterised in that** the permanent magnet means are arranged in a volume of a hollow cylinder.

9. Friction clutch according to any one of the previous claims, **characterised in that** the permanent magnet means are designed such that, with the electromagnet arrangement (9) electrically switched on, the connection of the friction section (14) to the rotor (2) can be released by weakening the magnetic effect of the permanent magnet means.

10. Friction clutch according to any one of the previous claims, **characterised in that** the permanent magnet means are sintered or sprayed.

11. Friction clutch according to any one of the previous claims **characterised in that** the permanent magnet means are formed as annular segments (23a-23f).

## Revendications

1. Embrayage à friction (1) pour transmettre à un élément (6) à entraîner un couple d'un rotor (2) pouvant être entraîné autour d'un axe, comprenant un embrayage par disques de friction (13) pourvu d'une unité d'électroaimants (9), laquelle comprend un corps de bobine (10) et un support de bobine (11) conducteur de manière ferromagnétique qui porte le corps de bobine (10) et l'entoure au moins en partie, et des moyens d'aimants permanents (4) disposés au voisinage du support de bobine (11) étant prévus par l'intermédiaire desquels une section de friction (14) axialement mobile de l'embrayage par disques de friction (13) peut être reliée magnétiquement au rotor (2), **caractérisé en ce que** les moyens d'aimants permanents (4) sont disposés sur le rotor (2) de telle sorte que les moyens d'aimants permanents (4), d'un côté situé transversalement à sa direction d'aimantation, ne sont pratiquement recouverts par aucune section du rotor (2) conductrice magnétiquement, des moyens d'ancrage étant prévus pour placer les moyens d'aimants permanents (4) sur le rotor (2), lesquels comprennent une section de réception ménagée à cet effet sur le rotor (2) au moyen de laquelle les moyens d'aimants permanents (4) sont montés sur le rotor (2) dans la position correcte, et les moyens d'aimants permanents (4) étant disposés dans un volume d'une section de forme tubulaire.

2. Embrayage à friction selon la revendication 1, **caractérisé en ce que** les moyens d'ancrage comprennent un épaulement (26) contre lequel s'appuie, lorsque les moyens d'aimants permanents (4, 30) sont montés sur le rotor (2) dans la position correcte, une surface de butée (4a, 30a) des moyens d'aimants permanents (4, 30), laquelle surface de butée est adaptée à l'épaulement (26) de l'aimant permanent.

3. Embrayage à friction selon la revendication 1 ou 2, **caractérisé en ce que** les moyens d'ancrage présentent une zone d'appui (27, 32) en retrait par rapport à un côté du rotor (2, 31).

4. Embrayage à friction selon l'une des revendications précédentes, **caractérisé en ce qu'**un élément de retenue (23, 28) est prévu sur lequel sont présents les moyens d'aimants permanents (23a-23f, 30), l'élément de retenue (23, 28) pouvant être enfiché de manière réversible sur le rotor, notamment pouvant être encliqueté, pour fixer les moyens d'aimants permanents (23a-23f, 30).

5. Embrayage à friction selon l'une des revendications précédentes, **caractérisé en ce que** l'élément de retenue (23, 28) comprend un corps de base annulaire qui est monté de façon réversible sur le rotor (22, 31).

6. Embrayage à friction selon l'une des revendications précédentes, **caractérisé en ce qu'**une liaison par colle est formée en vue de monter les moyens d'aimants permanents sur le rotor.

7. Embrayage à friction selon l'une des revendications précédentes, **caractérisé en ce qu'**une bague de retenue (8) pouvant être insérée dans une rainure (7) sur le rotor (2) est prévue pour, à l'état monté, fixer les moyens d'aimants permanents (4) sur le rotor (2) par rapport à au moins une direction.

8. Embrayage à friction selon l'une des revendications précédentes, **caractérisé en ce que** les moyens d'aimants permanents sont disposés dans un volume d'un cylindre creux.

9. Embrayage à friction selon l'une des revendications précédentes, **caractérisé en ce que** les moyens d'aimants permanents sont dimensionnés de telle sorte qu'à l'état commuté électriquement de l'unité d'électroaimants (9), la liaison entre la section de friction (14) et le rotor (2) peut être suspendue par affaiblissement de l'effet magnétique des moyens d'aimants permanents.

10. Embrayage à friction selon l'une des revendications précédentes, **caractérisé en ce que** les moyens d'aimants permanents sont frittés ou moulés par injection.

11. Embrayage à friction selon l'une des revendications précédentes, **caractérisé en ce que** les moyens d'aimants permanents sont conçus sous la forme de segments d'anneau (23a-23f).
